(19) Europäisches Patentamt
European Patent Office
Office européen des brevets

(11)  **EP 1 987 642 B1**

(12)  **EUROPÄISCHE PATENTSCHRIFT**

(45) Veröffentlichungstag und Bekanntmachung des Hinweises auf die Patenterteilung:
**22.08.2012  Patentblatt 2012/34**

(21) Anmeldenummer: **07704434.5**

(22) Anmeldetag: **07.02.2007**

(51) Int Cl.:
**H04L 12/66** (2006.01)

(86) Internationale Anmeldenummer:
**PCT/EP2007/051180**

(87) Internationale Veröffentlichungsnummer:
**WO 2007/093546 (23.08.2007 Gazette 2007/34)**

(54) **GATEWAY ZUM AUTOMATISCHEN ROUTEN VON NACHRICHTEN ZWISCHEN BUSSEN**

GATEWAY FOR THE AUTOMATIC ROUTING OF MESSAGES BETWEEN BUSES

PASSERELLE D'ACHEMINEMENT AUTOMATIQUE DE MESSAGES ENTRE DES BUS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.02.2006  DE 102006006926
05.01.2007  DE 102007001137**

(43) Veröffentlichungstag der Anmeldung:
**05.11.2008  Patentblatt 2008/45**

(73) Patentinhaber: **Robert Bosch GmbH
70442 Stuttgart (DE)**

(72) Erfinder:
• **IHLE, Markus
72127 Jettenburg (DE)**
• **TAUBE, Jan
72760 Reutlingen (DE)**
• **LORENZ, Tobias
72766 Reutlingen (DE)**

(56) Entgegenhaltungen:
• **RYAN C ET AL: "Clock synchronisation on multiple TTCAN network channels" MICROPROCESSORS AND MICROSYSTEMS, IPC BUSINESS PRESS LTD. LONDON, GB, Bd. 28, Nr. 3, 23. April 2004 (2004-04-23), Seiten 135-146, XP004502590 ISSN: 0141-9331**

EP 1 987 642 B1

## Beschreibung

Die vorliegende Erfindung betrifft ein Gateway zum automatischen Routen von Nachrichten zwischen Bussen, insbesondere zwischen seriellen Bussen und Feldbussen.

Die Vernetzung von Steuergeräten, Sensorik und Aktuatorik mithilfe eines Netzwerkes bzw. Kommunikationssystems bestehend aus einer Kommunikationsverbindung, insbesondere einem Bus, und entsprechenden Kommunikationsbausteinen, hat in den letzten Jahren beim Bau von modernen Kraftfahrzeugen oder auch im Maschinenbau, insbesondere im Werkzeugmaschinenbereich als auch in der Automatisierung drastisch zugenommen. Synergieeffekte durch Verteilung von Funktionen auf mehrere Teilnehmer, insbesondere Steuergeräte, können dabei erzielt werden. Man spricht hierbei von verteilten Systemen. Solche verteilten Systeme oder Netzwerke bestehen somit aus den Teilnehmern und dem diese Teilnehmer verbindenden Bussystem oder mehreren verbindenden Bussystemen. Die Kommunikation zwischen verschiedenen Stationen bzw. Teilnehmern findet damit mehr und mehr über ein solches Kommunikationssystem, Bussystem oder Netzwerk statt, über welches die zu übertragenden Daten in Botschaften übermittelt werden. Dieser Kommunikationsverkehr auf dem Bussystem, Zugriffs- und Empfangsmechanismen sowie Fehlerbehandlung werden über ein entsprechendes Protokoll geregelt, wobei der Name des jeweiligen Protokolls häufig und so auch hier als Synonym für das Netzwerke bzw. das Bussystem selbst verwendet wird.

Als Protokoll beispielsweise hat sich der CAN-Bus (Controller Area Network) im Kfz-Bereich etabliert. Dieses ist ein ereignisgesteuertes Protokoll, d. h. Protokollaktivitäten wie das Senden einer Nachricht werden durch Ereignisse initiiert, die ihren Ursprung außerhalb des Kommunikationssystems haben. Der eindeutige Zugang zum Kommunikationssystem bzw. Bussystem wird über eine prioritätsbasierte Bitarbitrierung gelöst. Eine Vorraussetzung dafür ist, dass den zu übertragenden Daten und damit jeder Botschaft eine Priorität zugewiesen ist. Das CAN-Protokoll ist sehr flexibel; ein Hinzufügen weiterer Teilnehmer und Botschaften ist damit problemlos möglich, solange es noch freie Prioritäten (Message Identifier) gibt. Die Sammlung aller im Netzwerk zu sendenden Botschaften mit Prioritäten und deren sendenden bzw. empfangenden Teilnehmer bzw. den entsprechenden Kommunikationsbausteinen werden in einer Liste, der so genannten Kommunikationsmatrix, abgelegt.

Ein alternativer Ansatz zur ereignisgesteuerten, spontanen Kommunikation ist der rein zeitgesteuerte Ansatz. Alle Kommunikationsaktivitäten auf dem Bus sind strikt periodisch. Protokollaktivitäten wie das Senden einer Botschaft werden nur durch das Fortschreiben einer für das gesamte Bussystem gültigen Zeit ausgelöst. Der Zugang zu diesem Medium basiert auf der Zuteilung von Zeitbereichen, in denen ein Sender exklusives Senderecht hat. Dabei ist die Botschaftsreihenfolge in der Regel schon vor Inbetriebnahme festzusetzen. Es wird also ein Fahrplan erstellt, der den Anforderungen der Botschaften bezüglich Wiederholrate, Redundanz, Deadlines usw. genügt. Man spricht vom so genannten Bus-Schedule. Ein solches Bussystem ist beispielsweise das TTP/C.

Eine Verbindung der Vorteile beider genannter Busarten erfolgt im Lösungsansatz des zeitgesteuerten CAN, des so genannten TTCAN (Time Triggered Controller Area Network). Dieser genügt den oben skizzierten Forderungen nach zeitgesteuerter Kommunikation sowie den Forderungen nach einem gewissen Maß an Flexibilität. Der TTCAN erfüllt dies durch den Aufbau der Kommunikationsrunde in so genannten exklusiven Zeitfenstern für periodische Botschaften bestimmter Kommunikationsteilnehmer und in so genannte arbitrierende Zeitfenster für spontane Botschaften mehrerer Kommunikationsteilnehmer. TTCAN basiert dabei im Wesentlichen auf einer zeitgesteuerten, periodischen Kommunikation, die durch einen hauptzeitgebenden Teilnehmer bzw. Kommunikationsbaustein, den so genannten Zeitmaster mit Hilfe einer Zeitreferenznachricht getaktet wird.

Eine weitere Möglichkeit verschiedene Übertragungsarten zu verbinden bietet das FlexRay-Protokoll, wodurch ein schnelles, deterministisches und fehlertolerantes Bussystem insbesondere für den Einsatz in einem Kraftfahrzeug beschreiben wird. Dieses Protokoll arbeitet nach dem Verfahren des Time-Division-Multiple-Access (TDMA), wobei den Teilnehmern bzw. den zu übertragenden Botschaften feste Zeitschlitze zugewiesen werden, in denen sie exklusiven Zugriff auf die Kommunikationsverbindung, den Bus haben. Die Zeitschlitze wiederholen sich dabei in einem festgelegten Zyklus, sodass der Zeitpunkt zu dem eine Botschaft über den Bus übertragen wird, exakt vorausgesagt werden kann und der Buszugriff deterministisch erfolgt. Um die Bandbreite für die Botschaftsübertragung auf dem Bussystem optimal zu nutzen, wird der Zyklus in einen statischen und einen dynamischen Teil unterteilt. Die festen Zeitschlitze befinden sich dabei im statischen Teil am Anfang eines Buszyklusses. Im dynamischen Teil werden die Zeitschlitze dynamisch vergeben nach dem Verfahren des Flexible-Time-Division-Multiple-Access (FTDMA). Darin wird nun der exklusive Buszugriff Jeweils nur für eine kurze Zeit ermöglicht. Erfolgt kein Zugriff, wird der Zugriff für den nächsten Teilnehmer freigegeben. Diese Zeitspanne wird als Minislot bezeichnet, in der auf den Zugriff des ersten Teilnehmers gewartet wird.

Das Dokument RYAN C ET AL: "Clock synchronisation on multiple TTCAN network channels" MIROPROCESSORS AND MICROSYSTEMS, IPC BUSINESS PRESS LTD. LONDON, GB, Bd. 28, Nr. 3, 23.April 2004 (2004-04-23), Seiten 135-146, XP004502590 offenbart ein Gateway zum automatischen Routen von Nachrichten zwischen Bussen mit:

- mehreren Kommunikationsbausteinen zum Zwischenspeichern und Übertragen von Nachrichten über die Busse;

und mit

- einer Gateway-Steuereinheit, die über einen Systembus zum Austausch von Nachrichten mit den Kommunikationsbausteinen verbunden ist, und die von jedem Kommunikationsbaustein das dortige Auftreten einer zu routenden Nachricht als externes Ereignis angezeigt erhält.

Wie soeben dargestellt gibt es eine Vielzahl unterschiedlicher Übertragungstechnologien und damit Arten von Bussystemen oder Netzwerken. Häufig ist es so, dass mehrere Bussysteme gleicher oder unterschiedlicher Art miteinander verbunden werden müssen. Dazu dient eine Busschnittstelleneinheit, ein so genanntes Gateway. Ein Gateway ist somit eine Schnittstelle zwischen verschiedenen Bussen, die von gleicher oder unterschiedlicher Art sein können, wobei das Gateway (Teil-)Botschaften von einem Bus auf einen oder mehrere andere Busse weiterleitet. Bekannte Gateways bestehen aus mehreren unabhängigen Kommunikationsbausteinen, wobei der Austausch von Botschaften dabei über die Prozessorschnittstelle (CPU-Interface) des jeweiligen Teilnehmers bzw. den entsprechenden Schnittstellenbaustein des jeweiligen Kommunikationsbausteins erfolgt Dabei wird dieses CPU-Interface durch diesen Datenaustausch und weitere applikative Funktionen zusätzlich zu den zum Teilnehmer selbst zu übertragenden Botschaften stark belastet, wodurch sich zusammen mit der sich daraus ergebenden Übertragungsstruktur eine relativ niedrige Datenübertragungsgeschwindigkeit oder anderseits eine hohe Taktfrequenz mit hoher Leistungsaufnahme ergibt. Weiterhin gibt es integrierte Kommunikationscontroller oder Kommunikationsbausteine, die sich einen gemeinsamen Botschaftsspeicher, das so genannte Nachrichtenspeicher bzw. Message-RAM, teilen um damit die Strukturnachteile zu kompensieren. Allerdings sind solche integrierten Kommunikationsbausteine dadurch bezüglich der Datenübertragung sehr unflexibel und insbesondere auf eine bestimmte Anzahl von Busanschlüssen und meist auch auf das gleiche Bussystem festgelegt.

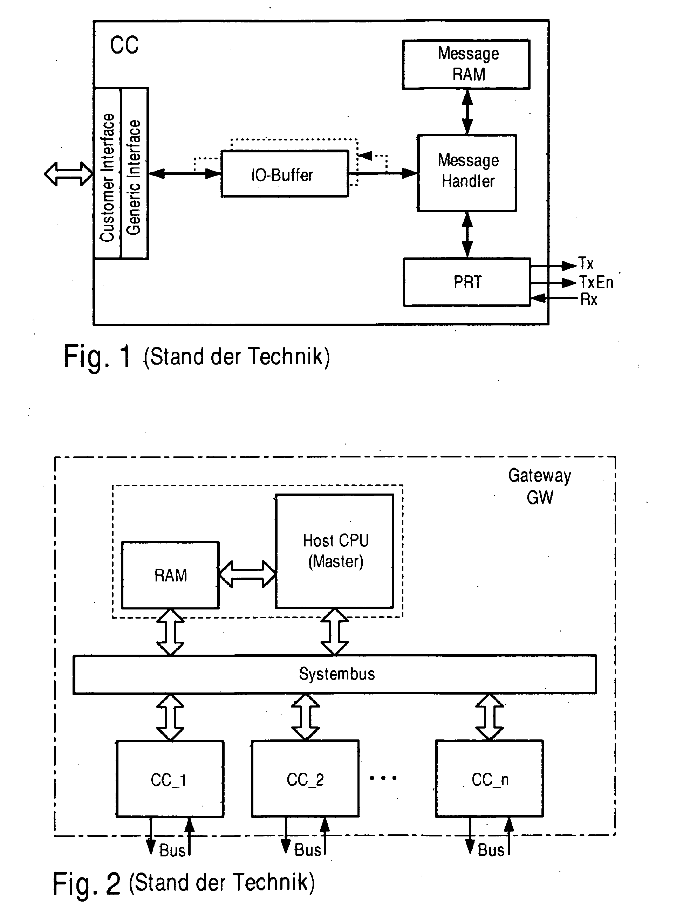

Figur 1 zeigt einen herkömmlichen Kommunikationsbaustein bzw. Kommunikationscontroller CC für ein herkömmliches Gateway, wie es in Figur 2 dargestellt ist. Der Kommunikationsbaustein CC weist ein Interface für einen internen Peripheriebus bzw. Systembus des Gateways und ein weiteres Interface für einen externen seriellen Bus auf. Der Systembus umfasst einen Adressbus, einen Datenbus und einen Steuerbus und dient zur internen Datenübertragung innerhalb des Gateways. An dem Systembus sind neben dem Kommunikationsbaustein eine Host-CPU mit einem Datenspeicher RAM sowie weitere optionale Komponenten, z.B. DMA-Controller, angeschlossen. Die Host-CPU dient zur internen Datenverarbeitung und steuert den internen Datentransfer von einem Kommunikationsbaustein CC zu einem anderen Kommunikationsbaustein CC. Die Kommunikationsbausteine CC kommunizieren mit der Host-CPU nach dem Master-/Slave-Prinzip, wobei Kommunikationsbausteine Slave-Einheiten darstellen und die Host-CPU eine Master-Einheit bildet.

Wie man aus Figur 1 erkennen kann, wird die interne Schnittstelle des Kommunikationsbausteins CC zu dem Systembus durch ein zweischichtiges Interface gebildet, nämlich durch ein Customer-Interface und ein generisches Interface. Das Customer-Interface verbindet den Systembus mit dem generischen Interface, wobei das Customer-Interface herstellerspezifisch und leicht austauschbar ist. Das generische Interface ist über das Customer-Interface an eine große Anzahl von kundenspezifischen Systembussen anschließbar. Der Kommunikationsbaustein CC nach dem Stand der Technik und wie er in Figur 1 dargestellt ist, enthält ferner Pufferspeicher zum Zwischenspeichern von zu transferierenden Daten. Die Pufferspeicher werden beispielsweise durch RAM- oder Datenregister gebildet. Der Kommunikationsbaustein CC enthält ferner eine Nachrichtenweiterleitungseinheit bzw. einen Message-Handler zur Weiterleitung von Nachrichten von mindestens einem Nachrichtenspeicher und einer Kommunikationsprotokolleinheit, sowie Pufferspeichern. Der Nachrichtenspeicher bzw. das Message-RAM speichert die zu transferierenden Nachrichtenobjekte sowie Konfigurations- und Statusinformationsdaten zwischen. Die Nachrichtenweiterleitungseinheit übernimmt die Steuerung des Datenflusses zwischen allen Pufferspeichern, der Kommunikationsprotokolleinheit und dem Nachrichtenzwischenspeicher. Die Kommunikationsprotokolleinheit (PRT) des in Figur 1 dargestellten herkömmlichen Kommunikationsbausteins CC implementiert die Kommunikation gemäß dem eingesetzten Datenübertragungsprotokoll. Dabei übernimmt die Kommunikationsprotokolleinheit PRT die Umwandlung bzw. Umsetzung zwischen dem Datenformat der über den externen seriellen Bus übertragenen Datenpakete DP und den innerhalb des Kommunikationsbausteins verwendeten Nachrichten bzw. Messages MSG. Die von der Nachrichtenweiterleitungseinheit bzw. dem Message-Handler weitergeleiteten Nachrichten MSG bestehen dabei zumindest aus einem Datenwort DW, wobei die Wortlänge bzw. die Bitzahl des Datenwortes DW vorzugsweise der Busbreite des internen vorgesehenen Datenbusses des Gateways entspricht. Weist der Systembus beispielsweise einen 32 Bit breiten internen Datenbus auf, umfasst das Datenwort DW ebenfalls 32 Bit. Eine Nachricht bzw. Message MSG kann aus einer vorgegebenen Anzahl von Datenworten DW bestehen. Die Speicherkapazität eines Pufferspeichers entspricht beispielsweise dem Datenumfang einer Nachricht bzw. einer Message, die eine vorgegebene Anzahl von Datenworten DW umfasst. Die Arbitrierung des Datenflusses wird durch die Nachrichtenweiterleitungseinheit bzw. den Message-Handler vorgenommen.

Insbesondere in Fahrzeugen kommen heutzutage mehrere serielle Busse und Feldbusse, beispielsweise serielle Feldbusse wie ein CAN-Bus, ein Flex Ray-Bus, ein MOST-Bus oder ein LIN-Bus zum Einsatz. Während des Betriebs werden zwischen diesen seriellen Bussen, die einen Teil eines Netzwerkes bilden können, Daten über ein Gateway GW ausgetauscht. Abhängig von dem Fahrzeug und den durchgeführten Funktionen kann dabei das Datenaufkommen in dem zentralen Gateway GW, wie es in Figur 2 dargestellt ist, sehr hoch sein. Dieses Datenaufkommen verursacht eine hohe CPU-Last, d. h. die CPU wird damit belastet, Daten von einem seriellen Bus auf einen oder mehrere andere serielle Busse zu routen. Ferner wird die CPU-Last durch Operationen erhöht, die zur Reduzierung von Bandbreite in einzelnen Netzwerken bzw. seriellen Bussen benötigt werden, beispielsweise die Kombination der Dateninhalte mehrerer Nachrichten bzw. Messages zu einer neuen Nachricht.

In vielen Fällen ist es erforderlich, Nachrichten zur Erfüllung von Sicherheitsanforderungen periodisch in einem vorgegebenen Zeitraster zu senden. Bei hochprioren Nachrichten kann die sofortige Übermittlung der Nachricht ohne Zeitraster bzw. außerhalb des Zeitrasters erforderlich sein. Die Überprüfung, ob eine Nachricht erneut gesendet werden soll bzw. eine Nachricht wegen eines aufgetretenen Fehlers, beispielsweise einer ausgebliebenen Nachricht, nicht mehr gesendet werden darf, erfolgt ebenfalls durch die CPU des Gateways GW und verbraucht Rechenleistung der CPU.

In vielen Fällen führt die CPU weitere Funktionen parallel durch d. h., auf der CPU laufen parallele Verarbeitungsprozesse ab, die sich gegenseitig negativ beeinflussen und das Senden bzw. das Weiterleiten einer Nachricht verzögern. Durch diese parallel ablaufenden Prozesse erhöhen sich der Jitter sowie die Latenzzeiten für die Übertragung der Nachrichten, da eine Unterbrechung der parallel ablaufenden Prozesse in vielen Fällen nicht möglich ist.

Es ist daher die Aufgabe der vorliegenden Erfindung, ein Gateway zum automatischen Routen von Nachrichten zwischen Bussen zu schaffen, welches Nachrichten ohne Beeinflussung der CPU und unabhängig von einer CPU-Last weiterleitet.

Diese Aufgabe wird erfindungsgemäß durch ein Gateway mit den im Patentanspruch 1 angegebenen Merkmalen gelöst.

Die Erfindung schafft ein Gateway zum automatischen Routen von Nachrichten zwischen Bussen mit:

-    mehreren Kommunikationsbausteinen zum Zwischenspeichern und Übertragen von Nachrichten N über die Busse; und mit

-    einer Gateway-Steuereinheit, die über einen Systembus zum Austausch von Nachrichten N mit den Kommunikationsbausteinen verbunden ist, und die von jedem Kommunikationsbaustein das dortige Auftreten einer zu routenden Nachricht N als externes Ereignis $EV_{ext}$ angezeigt erhält,
     wobei die Gateway-Steuereinheit aufweist:

    -    einen Vektorspeicher VRAM mit einem ersten Speicherbereich zum Speichern von Kommunikationsbaustein-Vektoren KBV, wobei für jeden Kommunikationsbaustein ein Kommunikationsbaustein-Vektor KBV vorgesehen ist, der den Zeitpunkt ZP eines als nächstes zu erwartenden internen Ereignisses $EV_{int}$ für eine in dem Kommunikationsbaustein zwischengespeicherte Nachricht N und eine Vektorsprungadresse auf einen Nachrichtenvektor NV angibt, der in einem zweiten Speicherbereich des Vektorspeichers VRAM gespeichert ist, wobei für jede in dem Kommunikationsbaustein zwischengespeicherte relevante Nachricht N ein entsprechender Nachrichtenvektor NV gespeichert ist, der einen konfigurierbaren Zeitpunkt ZP eines von der zugehörigen Nachricht N auszulösenden internen Ereignisses $EV_{int}$, eine Befehlssprungadresse angibt, sowie weitere Konfigurations- und Steuerdaten;

    -    einen Befehlsspeicher IRAM zum Speichern von Befehlen, die durch die in dem Nachrichtenvektor NV angegebene Befehlssprungadresse adressierbar sind; und

    -    ein Statusregister SR auf, welches denjenigen Zeitpunkt für das nächste zu erwartende Ereignis von allen zu erwartenden internen Ereignissen für alle in den Kommunikationsbausteinen zwischengespeicherten Nachrichten N zwischenspeichert.

    -    eine Ablaufsteuerung FSM, die bei Auftreten eines internen Ereignisses $EV_{int}$ dessen Zeitpunkt ZP in einem Statusregister SR für alle in den Kommunikationsbausteinen zwischengespeicherten Nachrichten N zwischengespeichert ist oder bei Auftreten eines externen Ereignisses $EV_{ext}$, das der Ablaufsteuerung FSM durch einen Kommunikationsbaustein angezeigt wird, den zu dem jeweiligen Kommunikationsbaustein zugehörigen Kommunikationsbaustein-Vektor KBV aus dem ersten Speicherbereich des Vektorspeichers VRAM ausliest und mittels der darin enthaltenen Vektorsprungadresse die Befehlssprungadresse des adressierten Nachrichtenvektors NV aus dem zweiten Speicherbereich des Vektorspeichers VRAM ausliest und anschließend mittels der ausgelesenen Befehlssprungadresse mindestens einen Befehl aus dem Befehlsspeicher IRAM ausliest und ausführt, wobei die in den Vektoren NV, KBV angegebenen Zeitpunkte ZP aktualisiert werden.

Bei einer Ausführungsform des erfindungsgemäßen Gateways weist dieses mindestens einen weiteren Prozessor auf, der über einen zweiten separaten Systembus mit den Kommunikationsbausteinen verbunden ist.

Bei einer Ausführungsform des erfindungsgemäßen Gateways weist die Ablaufsteuerung der Gateway-Steuereinheit eine Ereignis-FSM, welche bei Auftreten eines internen oder eines externen Ereignisses $EV_{ext}$ die in dem Vektorspeicher VRAM gespeicherten Vektoren KBV, NV auswertet und die in den Vektoren angegebenen Zeitpunkte aktualisiert; und eine Befehls-FSM auf, welche die aus dem Befehlsspeicher IRAM ausgelesenen Befehle ausführt.

Bei einer Ausführungsform des erfindungsgemäßen Gateways weist ein Nachrichtenvektor NV zusätzlich eine Zeitdifferenz t zwischen dem Zeitpunkt eines von der zugehörigen Nachricht N auszulösenden internen oder externen Ereignis und einem Zeitpunkt des nächsten von der zugehörigen Nachricht N auszulösenden internen Ereignisses $EV_{int}$ auf.

Bei einer Ausführungsform des erfindungsgemäßen Gateways weist die Gateway-Steuereinheit einen Zähler Z als internen Zeitgeber zum Auslösen eines internen Ereignisses $EV_{int}$ auf.

Bei einer Ausführungsform des erfindungsgemäßen Gateways werden die Busse durch serielle Busse gebildet.

Bei einer Ausführungsform des erfindungsgemäßen Gateways weist jeder Kommunikationsbaustein auf:

- eine an den seriellen Bus angeschlossene Kommunikations-Protokolleinheit zur Umsetzung zwischen Datenpaketen DP und Nachrichten, die jeweils aus mehreren Datenworten DW bestehen;

- eine Nachrichtenweiterleitungseinheit zur Weiterleitung von Nachrichten zwischen mindestens einem Nachrichtenspeicher und der Kommunikations-Protokolleinheit sowie Pufferspeichern;

- mehrere Interface-Einheiten, die jeweils an einen zugehörigen Systembus des Gateways angeschlossen sind, wobei jede Interface-Einheit mit mindestens einem zugehörigen Pufferspeicher verbunden ist, der eine Nachricht zwischenspeichert, wobei eine Übertragung von

Datenworten DW über mehrere Systembusse und deren zugehörige Interface-Einheiten von und zu den Pufferspeichern der Interface-Einheiten zeitgleich ohne Wartezeit erfolgt.

Bei einer Ausführungsform des erfindungsgemäßen Gateways ist der serielle Bus ein Feldbus.

Bei einer Ausführungsform des erfindungsgemäßen Gateways ist der Feldbus ein CAN (Controller Area Network)-Bus.

Bei einer Ausführungsform des erfindungsgemäßen Gateways ist der Feldbus ein LIN (Local Interconnect Network)-Bus.

Bei einer Ausführungsform des erfindungsgemäßen Gateways ist der Feldbus ein FlexRay-Bus.

Bei einer Ausführungsform des erfindungsgemäßen Gateways ist der serielle Bus ein Ethernet-Bus.

Bei einer Ausführungsform des erfindungsgemäßen Gateways weist jeder der beiden Systembusse einen zugehörigen Systembus-Master auf.

Bei einer Ausführungsform des erfindungsgemäßen Gateways signalisiert die Nachrichtenweiterleitungseinheit eines Kommunikationsbausteins den Empfang einer über den Systembus wortweise übertragenen Nachricht an den Systembus-Master des Systembusses.

Bei einer Ausführungsform des erfindungsgemäßen Gateways bestätigt die Nachrichtenweiterleitungseinheit dem Systembus-Master den Erhalt einer zu übertragenden Nachricht durch Signale, nachdem dieser die Information angefragt hat.

Bei einer Ausführungsform des erfindungsgemäßen Gateways weist eine von dem jeweiligen Systembus empfangene Nachricht, welche in einem Pufferspeicher zwischengespeichert ist und von der Nachrichtenweiterleitungseinheit an den Nachrichtenspeicher weitergeleitet wird zur Signalisierung einer Sendebereitschaft über den seriellen Bus mindestens ein Flag-Bit auf.

Im Weiteren werden bevorzugte Ausführungsformen des erfindungsgemäßen Gateways unter Bezugnahme auf die beigefügten Figuren zur Erläuterung erfindungswesentlicher Merkmale beschrieben.

Es zeigen:

Figur 1: einen Kommunikationsbaustein nach dem Stand der Technik;

Figur 2: ein Gateway nach dem Stand der Technik;

Figur 3: ein Blockschaltbild einer möglichen Ausführungsform des erfindungsgemäßen Gateways;

Figur 4: ein Blockschaltbild einer möglichen Ausführungsform eines Kommunikationsbausteins innerhalb des erfindungsgemäßen Gateways;

Figur 5: ein Blockschaltbild einer möglichen Ausführungsform einer in dem erfindungsgemäßen Gateway enthaltenen Gateway-Steuereinheit;

Figur 6: ein Diagramm zur Darstellung eines Speicherinhalts eines in dem erfindungsgemäßen Gateway enthaltenen Vektorspeichers;

Figur 7: ein Diagramm zur Darstellung des Dateninhalts des in dem erfindungsgemäßen Gateway enthaltenen Befehlsspeichers;

Figur 8: ein Signaldiagramm zur Darstellung eines Beispiels zur Nachrichtenweiterleitung durch das erfindungsgemäße Gateway;

Figur 9: ein Signaldiagramm zur Darstellung eines weiteren Beispiels zur Nachrichtenweiterleitung durch das erfindungsgemäße Gateway;

Figur 10: ein Signaldiagramm zur Darstellung eines weiteren Beispiels zur Nachrichtenweiterleitung durch das erfindungsgemäße Gateway;

Figur 11: ein Signaldiagramm zur Darstellung eines weiteren Beispiels zur Weiterleitung von Nachrichten durch das erfindungsgemäße Gateway;

Figur 12: ein Signaldiagramm zur Darstellung eines weiteren Beispiels zur Weiterleitung von Nachrichten durch das erfindungsgemäße Gateway.

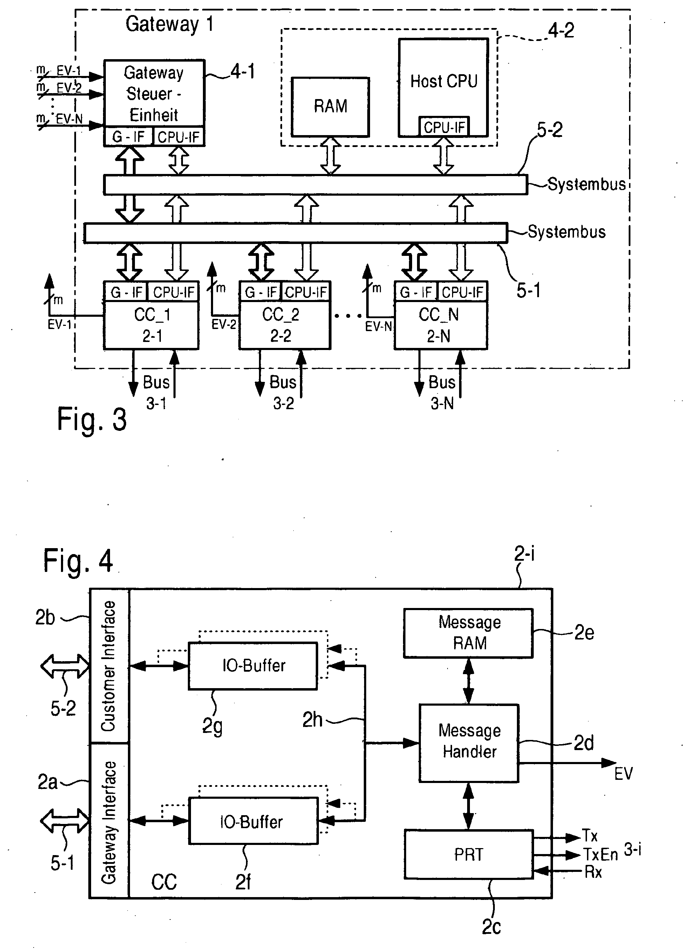

Wie man aus Figur 3 erkennen kann, weist das erfindungsgemäße Gateway 1 mehrere Kommunikationsbausteine 2-i auf, die jeweils an einen seriellen Bus 3-i anschließbar sind. Bei den seriellen Bussen 3-i handelt es sich beispielsweise um einen Feldbus oder einen Ethernet-Bus. Über die seriellen Busse 3-i werden Daten als Nachrichten übertragen. Übertragene Datenpakete bzw. Nachrichten umfassen Verwaltungs- bzw. Header-Daten sowie Nutz- bzw. Payload-Daten. Das erfindungsgemäße Gateway 1 gemäß der in Figur 3 dargestellten Ausführungsform weist mehrere Master-Einheiten auf, wobei eine erste Master-Einheit durch eine Gateway-Steuereinheit 4-1 und eine zweite Master-Einheit durch eine CPU 4-2 gebildet wird. Die beiden Master-Einheiten 4-1, 4-2 übernehmen unterschiedliche Funktionen. Bei der in Figur 3 dargestellten Ausführungsform ist die Gateway-Steuereinheit 4-1 für den Datentransfer zwischen den verschiedenen Kommunikationsbausteinen 2-i zuständig. Die andere Master-Einheit, die durch einen Prozessor 4-2 bestehend aus einer Host-CPU und einem internen Speicher RAM gebildet wird, führt die eigentliche Datenverarbeitung beispielsweise einer neben dem Gateway integrierten Steuergerätefunktion durch. Bei der in Figur 3 dargestellten Ausführungsform weist jede Master-Einheit 4-1, 4-2 vorzugsweise ihren eigenen Systembus 5-1, 5-2 auf. Jeder Systembus 5-1, 5-2 weist seinerseits seinen eigenen Daten-, Adress- und Steuerbus auf. Innerhalb des Gateways 1 werden die Daten bei einer möglichen Ausführungsform wortweise übertragen, wobei die Länge eines Datenwortes DW der Busbreite des jeweiligen Datenbusses des Systembusses entspricht. Die Kommunikationsbausteine 2-i weisen bei einer möglichen Ausführungsform für jeden Systembus 5-i ein ebenfalls vorzugsweise zugehöriges Interface auf.

Figur 4 zeigt eine mögliche Ausführungsform eines Kommunikationsbausteins 2-i. Der Kommunikationsbaustein 2-i dient zum Anschluss eines seriellen Busses 3 über ein Interface, wobei der Kommunikationsbaustein 2-i für jeden internen Systembus 5-i des Gateways 1 ein eigenes getrenntes Interface 2a, 2b aufweist. Bei der in Figur 4 dargestellten Ausführungsform weist der Kommunikationsbaüstein 2-i ein erstes Interface 2a zum Anschluss an den Systembus 5-1 auf, dessen Master-Einheit durch die Gateway-Steuereinheit 4-1 gebildet wird. Darüber hinaus weist der Kommunikationsbaustein 2-i ein weiteres Interface 2b zum Anschluss an den Systembus 5-2 des Gateways 1 auf, dessen Bus-Master durch die Host-CPU des Prozessors 4-2 gebildet wird. An den externen seriellen Datenbus 3-i ist eine Kommunikationsprotokolleinheit 2c des Kommunikationsbausteins 2-i angeschlossen. Die Kommunikationsprotokolleinheit 2c führt eine Umsetzung zwischen Datenpaketen bzw. Nachrichten durch, welche extern über den seriellen Datenbus 3-i übertragen werden und sendet mit Hilfe des Message Handlers intern Nachrichten bzw. Messages aus, die jeweils aus einem oder mehreren Datenworten DW bestehen können.

Der Kommunikationsbaustein 2-i in Figur 4 enthält ferner eine Nachrichtenweiterleitungseinheit bzw. einen Message-Handler 2d zur Weiterleitung von Nachrichten zwischen mindestens einem internen Nachrichtenspeicher bzw. Message-RAM 2e und der Kommunikationsprotokolleinheit 2c sowie verschiedenen Pufferspeichern 2f, 2g über interne Datenleitungen 2h. Die Speicherkapazität eines Pufferspeichers 2f, 2g entspricht vorzugsweise dem Datenumfang einer intern zu übertragenden Nachricht, sowie weiterer Verwaltungsdaten. Der Kommunikationsbaustein 2-i weist mehrere Interface-Einheiten 2a, 2b auf, die jeweils an einen zugehörigen Systembus 5-i des Gateways 1 angeschlossen sind. Dabei ist jede Interface-Einheit 2a, 2b mit mindestens einem zugehörigen Pufferspeicher 2f, 2g verbunden, in der mindestens eine Nachricht bzw. Message bzw. ein Message-Objekt MO zwischenspeicherbar ist.

Der Zugriff der Gateway-Steuereinheit 4-1 auf ein Message-Objekt MO bzw. eine Nachricht N erfolgt über das Gateway-Interface 2a und dessen zugehöriges Interface-Register 2f. Die CPU 4-2 greift über das Customer-Interface 5-2 und dessen zugehörigem Interface-Register 2g auf Nachrichten bzw. Message-Objekte zu. Somit ist sowohl von der Gateway-Steuereinheit 4-1 als auch von der Prozessoreinheit 4-2 der Zugriff auf alle Nachrichten bzw. Message-Objekte ohne gegenseitige Beeinflussung möglich.

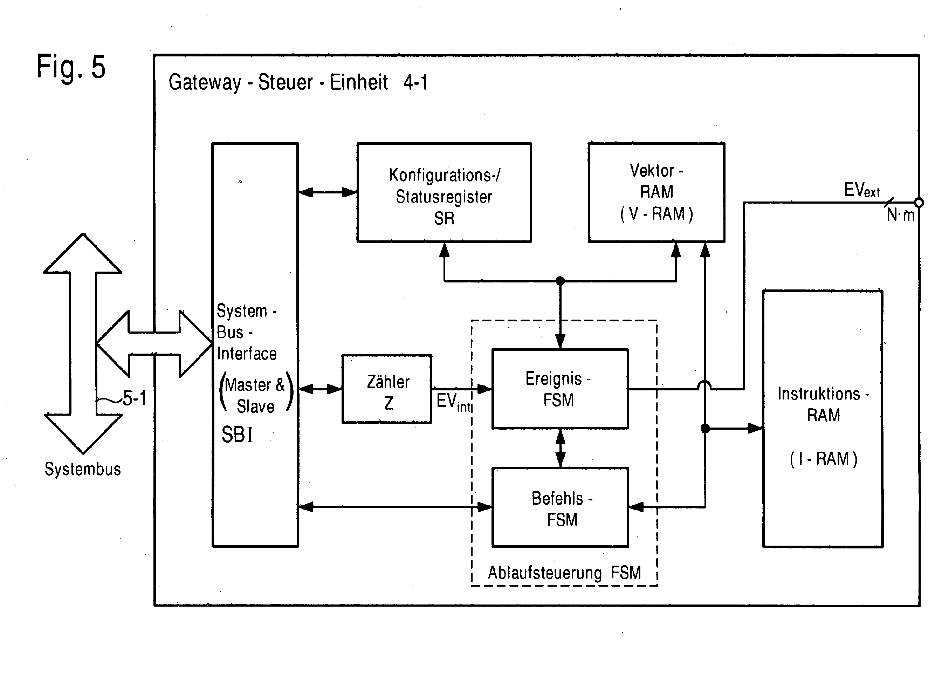

Figur 5 zeigt eine mögliche Ausführungsform einer in dem erfindungsgemäßen Gateway 1 enthaltenen Gateway-Steuereinheit 4-1. Die Gateway-Steuereinheit 4-1 ist über den zugehörigen Systembus 5-1 zum Austausch von Nachrichten mit den Kommunikationsbausteinen 2-i verbunden. Dabei erhält sie von jedem Kommunikationsbaustein 2-i das dortige Auftreten einer zu routenden Nachricht N bzw. eines zu routenden Message-Objekts MO als externes Ereignis $EV_{ext}$ angezeigt. Wie man aus Figur 3 erkennen kann, ist jeder Kommunikationsbaustein 2-i mit mindestens einer Anzeigeleitung zur Anzeige eines Ereignisses bzw. eines Events mit der Gateway-Steuereinheit 4-1 verbunden. Bei einer möglichen Ausführungsform weist der in Figur 4 dargestellte Kommunikationsbaustein 2-i mehrere parallele Nachrichtenregister für jedes Interface zum Speichern von einer Nachricht pro Nachrichtenregister auf. Bei einer möglichen Ausführungsform sind die Nachrichten dabei in mehrere Gruppen eingeteilt, beispielsweise in m Gruppen. Bei einer möglichen Ausführungsform ist die Anzahl der vorgesehenen Nachrichtengruppen innerhalb eines Kommunikationsbausteins 2-i m = 4. Der Message-Handler 2d des Kommunikationsbausteins 2-i zeigt bei Auftreten eines externen Ereignisses $EV_{ext}$, beispielsweise den Empfang einer weiterzuleitenden Nachricht der Gateway-Steuereinheit 4-1 über eine entsprechende Anzeigeleitung an. Bei einer möglichen Ausführungsform ist für jede Gruppe von Nachrichten eine eigene Anzeigeleitung vorgesehen, beispielsweise m = 4 Anzeigeleitungen. Beträgt die Anzahl der Kommunikationsbausteine 2-i N unter der Annahme das alle Kommunikationsbausteine 2-i ein identisches N haben und beträgt die Anzahl von Gruppen innerhalb des Kommunikationsbausteins 2-i m, dann ist die Anzahl der Anzeigeleitungen für externe Events bzw. Ereignisse N x m.

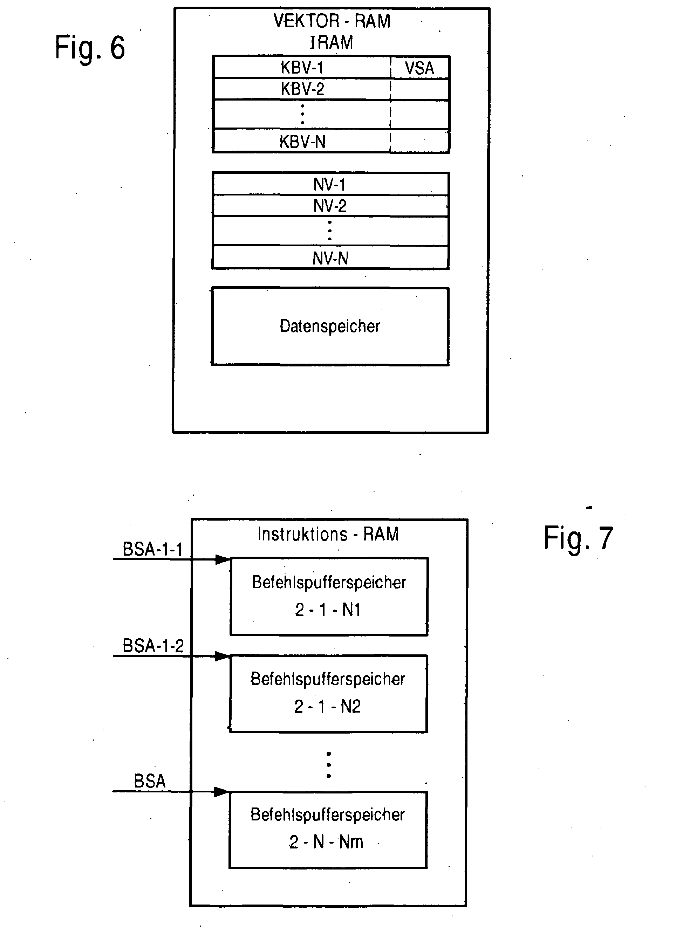

Wie man aus Figur 5 erkennen kann, ist die Gateway-Steuereinheit 4-1 über den Systembus 5-1 mit den Kommunikationsbausteinen 2-i verbunden und erhält von jedem Kommunikationsbaustein 2-i das dortige Auftreten einer zu routenden Nachricht als externes Ereignis $EV_{ext}$ über eine Anzeigeleitung angezeigt. Die Gateway-Steuereinheit 4-i enthält einen Vektorspeicher (VRAM) dessen Speicherinhalt in Figur 6 dargestellt ist. Darüber hinaus enthält die Gateway-Steuereinheit 4-1 einen Befehlsspeicher bzw. Instruction RAM (IRAM) zum Speichern von Befehlen dessen Speicherinhalt in Figur 7 dargestellt ist. Das zentrale Steuerelement der Gateway-Steuereinheit 4-1 wird durch eine Ablaufsteuerung bzw. einen Zustandsautomaten (FSM: Finite State Machine) gebildet, der sich aus einer Ereignis-FSM und einer davon getrennten Befehls-FSM zusammensetzt. Weiterhin enthält die Gateway-Steuereinheit 4-1 ein Statusregister SR und einen Zähler Z als Zeitgeber zum Auslösen von internen Ereignissen $EV_{int}$. Die Gateway-Steuereinheit 4-1 ist über ein Systembus-Interface SBI mit dem Systembus 5-1 verbunden. Der Vektorspeicher bzw. VRAM, wie er in Figur 6 dargestellt ist, enthält im Wesentlichen drei Speicherbereiche. In einem ersten Speicherbereich befinden sich Konfigurationsdaten der Kommunikationsbausteine 2, d. h. für jeden Kommunikationsbaustein 2-i ist pro Nachrichtengruppe ein Kommunikationsbaustein-Vektor KBV abgespeichert. Der Kommunikationsbaustein-Vektor KBV speichert für den zugehörigen Kommunikationsbaustein 2-i denjenigen Zeitpunkt ZP, der das nächste zu erwartende interne Ereignis $EV_{int}$ für eine in dem Kommunikationsbaustein 2-i zwischengespeicherte Nachricht N angibt. Zusätzlich weist der Kommunikationsbaustein-Vektor KBV eine Vektorsprungadresse VSA auf einen Nachrichtenvektor NV für die entsprechende Nachricht N auf. Zusätzlich weist jeder Kommunikationsbaustein-Vektor KBV weitere Konfigurationsdaten für den entsprechenden Kommunikationsbaustein 2-i auf. Ein mögliches Konfigurationsdatum wird durch ein CC-Flag gebildet, welches anzeigt, ob ein Kommunikationsbaustein 2 bzw. Communication Controller aktiviert bzw. deaktiviert ist. Weist der Kommunikationsbaustein 2 mehrere Gruppen von Nachrichten N auf, wird ein Kommunikationsbaustein-Vektor KBV für jede Gruppe von Nachrichten innerhalb des Kommunikationsbausteins 2 vorgesehen.

Der Vektorspeicher VRAM innerhalb der Gateway-Steuereinheit 4-1 enthält ferner einen zweiten Speicherbereich, in dem für jede Nachricht N bzw. für jede Message MSG Konfigurationsdaten als Nachrichtenvektoren NV abgespeichert sind. Für jede relevante Message bzw. Nachricht N ist ein Nachrichtenvektor NV in dem Vektorspeicher VRAM abgelegt. Für jede in einem Kommunikationsbaustein 2-i zwischengespeicherte Nachricht N ist ein entsprechender Nachrichtenvektor NV vorgesehen bzw. in dem VRAM abgespeichert, der einen konfigurierbaren Zeitraum ZP eines von der zugehörigen Nachricht N auszulösenden internen Ereignisses $EV_{int}$ sowie eine Befehlssprungadresse BSA angibt.

Bei einer möglichen Ausführungsform des erfindungsgemäßen Gateways 1 weist der Nachrichtenvektor NV zusätzlich eine Zeitdifferenz $\Delta t$ zwischen dem Zeitpunkt ZP eines von der zugehörigen Nachricht N auszulösenden internen oder externen Ereignis und einem weiteren Zeitpunkt ZP des nächsten von der zugehörigen Nachricht N auszulösenden internen Ereignisses auf.

Neben den Speicherbereichen für die Kommunikationsbaustein-Vektoren KBV und dem zweiten Speicherbereich für die Nachrichtenvektoren NV weist der Vektorspeicher VRAM ferner einen frei verfügbaren dritten Speicherbereich auf, in dem Variablen zwischengespeichert werden und in dem Konstanten und Flags abgespeichert sind. Darüber hinaus dient der frei verfügbare dritte Speicherbereich des Vektorspeichers VRAM zum Datenaustausch mit der CPU 4-2.

Die in dem zweiten Speicherbereich des Vektorspeichers VRAM abgespeicherten Nachrichtenvektoren NV weisen eine Befehlssprungadresse BSA auf, durch die mindestens eine Befehlsubroutine innerhalb des Befehlsspeichers IRAM adressierbar ist. Für jede Nachricht N ist in dem zweiten Speicherbereich des Vektorspeichers VRAM ein Nachrichtenvektor NV gespeichert, der jeweils eine Befehlssprungadresse BSA auf eine Subroutine innerhalb des Befehlsspeichers IRAM aufweist. Eine derartige Befehlssequenz bzw. Subroutine ist einem der jeweiligen Nachricht zugeordneten Speicherbereich im IRAM abgelegt. Die Größe des Speicherbereichs ist vorzugsweise variabel. Ferner ist die Position des Speicherbereichs innerhalb des Befehlsspeichers IRAM ebenfalls variabel.

In der Gateway-Steuereinheit 4-1 ist neben dem Vektorspeicher VRAM und dem Befehlsspeicher IRAM eine Ablaufsteuerung FSM vorgesehen, die eine Ereignis-FSM und eine Befehls-FSM aufweist. Die Ereignis-FSM der Ablaufsteuerung wertet bei Auftreten eines internen oder eines externen Ereignisses die in dem Vektorspeicher VRAM gespeicherten Vektoren, d. h. die Kommunikationsbaustein-Vektoren KBV und die Nachrichtenvektoren NV aus und aktualisiert die in den jeweiligen Vektoren angegebenen Zeitpunkte.

Darüber hinaus weist die Gateway-Steuereinheit 4-1 ein Konfigurations- bzw. Statusregister SR auf, welches unter Anderem denjenigen Zeitpunkt ZP für das allernächste zu erwartende Ereignis von allen zu erwartenden internen Ereignissen $EV_{int}$ für alle in den Kommunikationsbausteinen 2-i zwischengespeicherten Nachrichten zwischenspeichert.

Die Befehls-FSM innerhalb der Ablaufsteuerung führt die aus dem Befehlsspeicher IRAM ausgelesenen Befehle aus. Bei Auftreten eines internen Ereignisses $EV_{int}$ dessen Zeitpunkt ZP in einem Statusregister SR oder bei Auftreten eines externen Ereignisses $EV_{ext}$, das der Ablaufsteuerung von einem Kommunikationsbaustein 2-i angezeigt wird, liest die Ereignis-FSM den zu dem jeweiligen Kommunikationsbaustein 2-i zugehörigen Kommunikationsbaustein-Vektor KBV aus dem ersten Speicherbereich des Vektorspeichers VRAM aus. Ein ausgelesener Kommunikationsbaustein-Vektor KBV enthält eine Vektorsprungadresse VSA auf einen Nachrichtenvektor NV in dem zweiten Speicherbereich des Vektorspeichers VRAM. Für jeden Kommunikationsbaustein 2-i bzw. für jede Gruppe von Nachrichten N innerhalb eines Kommunikationsbausteins 2-i ist ein eigener Kommunikationsbaustein-Vektor KBV vorgesehen. Dieser bildet gewissermaßen eine Hash-Tabelle für die Nachrichtenvektoren NV in dem zweiten Speicherbereich des Vektorspeichers VRAM. Mittels der Vektorsprungadresse VSA liest die Ereignis-FSM der Ablaufsteuerung den adressierten Nachrichtenvektor NV aus dem zweiten Speicherbereich des Vektorspeichers VRAM aus und adressiert anschließend mit der darin enthaltenen Befehlssprungadresse BSA eine Subroutine innerhalb des Befehlsspeichers IRAM. Der adressierte Befehl bzw. die adressierten Befehle werden aus dem Befehlsspeicher IRAM gelesen und durch die Befehls-FSM innerhalb der Ablaufsteuerung abgearbeitet, wobei die Befehls-FSM auch die in den Vektoren, d. h. die in den Nachrichtenvektoren NV und Kommunikationsbausteinvektoren KBV angegebenen Zeitpunkten ZP entsprechend den NV und KBV Vektoren vorzugsweise durch die Ereignis-FSM oder den abgearbeiteten Befehlen aktualisiert.

Die in Figur 5 dargestellte Gateway-Steuereinheit 4-1 weist einen Zähler Z als internen Zeitgeber zum Auslösen eines internen Ereignisses auf.

Bei der erfindungsgemäßen Gateway-Steuereinheit 4-1 wird zwischen externen Ereignissen $Ev_{ext}$ und internen Ereignissen $EV_{int}$, unterschieden. Externe Ereignisse $EV_{ext}$ werden durch die Kommunikationsbausteine 2-i ausgelöst, insbesondere bei Empfang einer weiterzuleitenden Nachricht N bzw. eines weiterzuleitenden Nachrichtenpakets DP. Die internen Ereignisse $EV_{int}$ werden durch den Zeitgeber bzw. Zeitzähler Z ausgelöst. Diese internen Ereignisse dienen beispielsweise zum zyklischen Senden von Nachrichten oder dem Entprellen bzw. Debouncen von empfangenen Nachrichten-Bursts oder zum Senden von Time-out-Nachrichten bei Überschreiten eines Erwartungszeitraums. Für jeden relevanten Nachrichtenpufferspeicher innerhalb eines Kommunikationsbausteins 2-i ist bei einer möglichen Ausführungsform des erfindungsgemäßen Gateways 1 der Nachrichtenvektor NV im Vektorspeicher-VRAM abgelegt, welcher beispielsweise die folgenden Informationen aufweist, nämlich eine Referenz auf das zu sendende Datenobjekt bzw. die Nachricht N, eine Sprungadresse zur Ausführung einer bestimmten Befehlsfolge, des nächsten internen Ereignisses und einer Differenzzeit zur Berechnung der darauf folgenden internen Ereignisse, sowie Informationsdaten zur Steuerung und Statusinformationen.

Durch die in dem Vektorspeicher VRAM abgelegten Daten insbesondere definierten Zeitpunkte ZP, kann unter Einsatz des Zählers Z nahezu jeder zeitliche Ablauf durch die erfindungsgemäße Gateway-Steuereinheit 4-1 implementiert werden, um Daten zwischen zwei oder mehreren Bussen 3 über das Gateway 1 zu übertragen. Dabei wird beim Start des Systems der Zeitgeber Z bzw. Zähler initialisiert, sodass der Zähler den CPU-Takt in einem für das Gesamtsystem günstigen Zeitraster teilt. Der aktuelle Zählwert des Zählers Z wird zur Überprüfung der Nachrichtenobjekte in der Kommunikationsbausteinvektoren KBV und Nachrichtenvektoren NV des Vektorspeichers VRAM eingesetzt, um das Senden einer Nachricht N auszulösen. Dabei wird der Zählwert des Zeitgebers Z mit den in der Vektortabelle gespeicherten Zeitwerten verglichen. Ist der Zeitgeberwert des Zählers Z größer oder gleich dem jeweils gespeicherten Zeitwert bzw. Zeitpunkt und handelt es sich bei der entsprechenden Nachricht N bzw. bei dem Nachrichtenobjekt um ein Sendeobjekt, wird an die angegebene Adresse gesprungen und die dort angegebenen Befehle ausgeführt. Handelt es sich bei der Nachricht N bzw. dem Nachrichtenobjekt um ein Empfangsobjekt, wird überprüft, ob das Empfangsobjekt bereits empfangen hätte werden müssen oder nicht. Wird das Empfangsnachrichtenobjekt innerhalb der erwarteten Zeit nicht empfangen, wird durch das erfindungsgemäße Gateway 1 ein Time-out ausgelöst und eine entsprechende Time-out-Message abgegeben. Anschließend werden Zeitangaben durch die Ablaufsteuerung aktualisiert, wobei die Berechnung auf den bisherigen Zeitangaben mit den angegebenen Zykluszeiten basiert. Mittels der neu berechneten Zeitpunkte wird ermittelt, wann eine Nachricht N bzw. Message erneut gesendet werden soll bzw. das nächste Time-out erfolgt.

Bei einer unmittelbaren bzw. sofortigen Weiterleitung einer Nachricht N ist der Vergleich des von dem Zähler Z angegebenen Zeitwertes nicht erforderlich. Es wird der Gateway-Steuereinheit 4-1 durch den Kommunikationsbaustein 2-i mitgeteilt, dass eine Nachricht N durch den Kommunikationsbaustein 2 empfangen wurde. Anschließend sucht die Ablaufsteuerung FSM in dem Vektorspeicher VRAM nach einem entsprechenden Eintrag, d. h. einen zu der Nachricht N zugehörigen Kommunikationsbaustein-Vektor KBV. Dieser Vektor KBV zeigt auf einen Nachrichtenvektor NV in dem zweiten Speicherbereich des Vektorspeichers VRAM. Dieser enthält eine Befehlssprungadresse BSA zu einer Routine, in der die Routingbefehle abgelegt sind.

Die Auswertung des Zeitwertes, der durch den Zähler Z geliefert wird, zur Berechnung der neuen Erwartungszeitwerte bzw. erwarteten Zeitpunkten ZP sowie die Ansteuerung der verschiedenen Kommunikationsbausteine 2-i wird von der automatisch ablaufenden Ablaufsteuerung bzw. Finite State Machine übernommen. Die Ablaufsteuerung FSM überprüft mit Hilfe eines Zählers Z und eines Statusregisters SR alle zu sendenden Nachrichtenobjekte bzw. Nachrichten und überprüft zusätzlich den Empfang von externen neuen Nachrichten N durch die Kommunikationsbausteine 2-i. Beim Auftreten eines internen Ereignisses, beispielsweise das zyklische Senden einer Nachricht oder eines externen Ereignisses, beispielsweise dem Empfang einer weiterzuleitenden Nachricht N durch einen Kommunikationsbaustein 2, werden die konfigurierten Routingbefehle ausgeführt und die verschiedenen Kommunikationsbausteine 2 angesteuert. Durch die Anbindung der Kommunikationsbausteine 2 über das Customer-Interface 5-2 besteht für die CPU 4-2 im erfindungsgemäßen Gateway 1 jederzeit die Möglichkeit, auf Nachrichten N in dem Kommunikationsbaustein bzw. Bus-Modulen 2-i zuzugreifen. Die Nachrichten N werden in den Kommunikationsbaustein 2-i bzw. in den Bus-Modulen der seriellen Busse 3-i vorzugsweise zwischengespeichert und werden bei dem erfindungsgemäßen Gateway 1 für das automatische Routen bei einer möglichen Ausführungsform nicht in die Gateway-Steuereinheit 4-i geladen. Eine Übertragung der Nachrichten zwischen den Kommunikationsbausteinen bzw. Bus-Modulen 2-i erfolgt bei einer möglichen Ausführungsform des erfindungsgemäßen Gateways 1 durch einen weiteren Bus, nämlich einen Ringbus, der die verschiedenen Kommunikationsbausteine ringförmig miteinander verbindet. Die CPU 4-2 kann auf alle zwischengespeicherten Nachrichtenobjekte bzw. Nachrichten N innerhalb eines Kommunikationsbausteins 2-i über das Interface-Register 2g zugreifen, während die Gateway-Steuereinheit 4-2 den Zugriff über das zweite Interface-Register 2f ausführt.

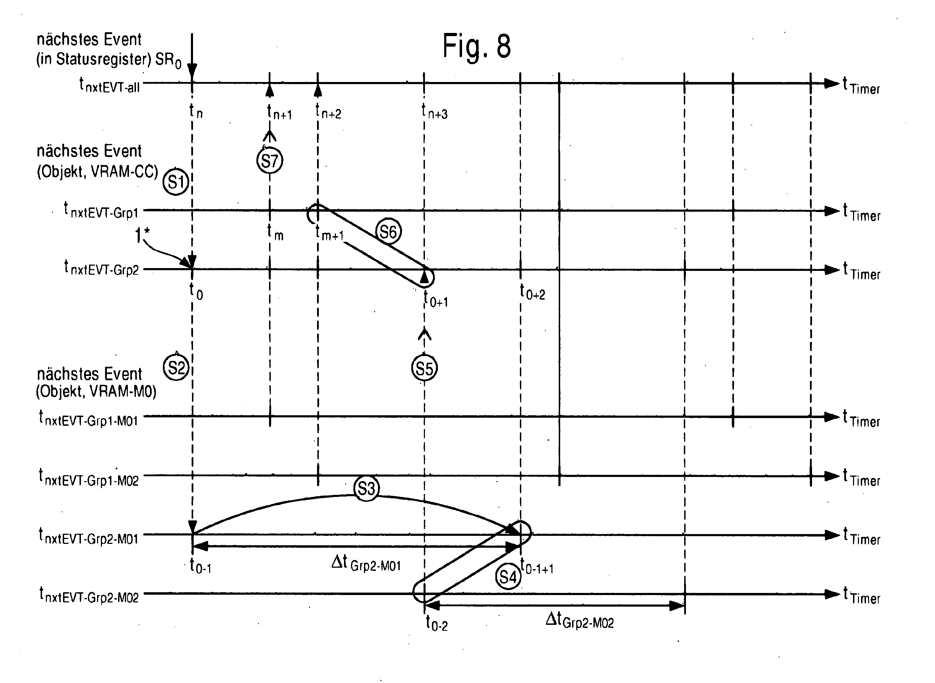

Figur 8 zeigt Signalablaufdiagramme zur Verdeutlichung der Funktionsweise bei einer möglichen Ausführungsform des erfindungsgemäßen Gateways 1. In dem Statusregister SR der Gateway-Steuereinheit 4-1 ist derjenige Zeitpunkt ZP zwischengespeichert, an dem das nächste zu erwartende Ereignis, d. h. das allernächste zu erwartende Ereignis von allen zu erwartenden internen Ereignissen für alle in dem Kommunikationsbaustein 2-i zwischengespeicherten Nachrichten N auftritt. In dem Statusregister SR ist somit der allernächste interne Event bzw. das von der Gateway-Steuereinheit 4-1 als nächste zu erwartende interne Ereignis $EV_{int}$ zwischengespeichert. Sobald der Zeitgeber Z einen Zählwert ausgibt, der den Eintritt dieses Ereignisses angibt ($t_{nxtEVTall} \leq$ TIMER) ermittelt die Ereignis-FSM innerhalb der Ablaufsteuerung den zugehörigen Kommunikationsbausteinen 2-i und wertet alle in dem Vektorspeicher VRAM abgespeicherten Kommunikationsbaustein-Vektoren KBV für die jeweilige Gruppe innerhalb des entsprechenden Kommunikationsbausteins 2-i aus. Bei dem in Figur 8 dargestellten einfachen Beispiel weist der Kommunikationsbaustein 2 zwei Nachrichten bzw. Message Groups auf, nämlich eine Gruppe GRP1 und eine Gruppe GRP2. Die Ereignis-FSM wertet im Schritt S1 den Zeit-Event auslösenden Kommunikationsbaustein-Vektor KBV, welcher in dem ersten Speicherbereich des Vektorspeichers VRAM abgelegt ist, aus und findet bei dem in Figur 8 dargestellten Beispiel den Kommunikationsbaustein-Vektor KBV für die zweite Gruppe GRP2 der zwischengespeicherten Nachrichten innerhalb des Kommunikationsbausteins 2. In einem weiteren Schritt S2 wird der Zeit-Event auslösende Nachrichtenvektor NV im zweiten Speicherbereich des zweiten Vektorspeichers VRAM ausgelesen und ausgewertet. Bei dem in Figur 8 dargestellten Beispiel ist der das Event EV auslösende Vektor der Vektor der ersten Nachricht N bzw. des Nachrichtenobjekts (Message-Objekt 1) innerhalb der zweiten Gruppe GRP2 des auslösenden Kommunikationsbausteins 2-i.

In einem weiteren Schritt S3 wird das nächste Zeit-Event bzw. das nächste interne Ereignis für dieses Nachrichtenobjekt bzw. dieses Message-Objekt MO berechnet:

$$t_{nxtEV+1-Grp_n-MO_m} = t_{nxtEVt-Grp_n-MO_m} + t_{Grp_n-MO_m}$$

Dies ist möglich, da jeder Nachrichtenvektor NV zusätzlich eine Zeitdifferenz t zwischen dem Zeitpunkt ZP eines von der zugehörigen Nachricht N bzw. dem Nachrichten-Objekt NO auszulösenden internen Ereignisses und einem Zeitpunkt ZP des nächsten von der entsprechenden Nachricht N auszulösenden internen Ereignisses aufweist.

In einem weiteren Schritt S4 wird das nächste Zeit-Event bzw. das nächste interne Ereignis $EV_{int}$ durch die Ereignis-FSM gesucht:

$$t_{nextEV\text{-}GRPn} = \text{minimum } (t_{nxtEV\text{-}GRPn\text{-}MOm}) : m \in \{1 \ldots m_{max}\}$$

In einem weiteren Schritt S5 erfolgt eine Aktualisierung der Zeitangabe $t_{nxt}t_{EV\text{-}GRPn}$ in dem Kommunikations-baustein-Vektor KBV innerhalb des ersten Speicherbereichs des Vektorspeichers VRAM aus den ermittelten Zeitpunkten.

In einem weiteren Schritt S6 kann der nächste Zeit-Event bzw. das zu erwartende nächste interne Ereignis über alle Gruppen von gespeicherten Nachrichten bzw. Message-Objekten MO über alle Kommunikationsbausteine 2-i selektiert werden. Bei dem in Figur 8 dargestellten Beispiel ist dies Zeitpunkt $t_m$ für die erste Gruppe GRP1 innerhalb des ersten Kommunikationsbausteins.

In einem anschließenden Schritt S7 wird in dem Statusregister SR dieser Zeitpunkt $t_m$ als Zeitpunkt $t_{n+1}$ das allernächste zu erwartende interne Ereignis bzw. interne Event abgespeichert. Sobald der Zähler Z diesen Zeitpunkt $t_{n+1}$ erreicht, beginnt der in Figur 8 dargestellte Vorgang von Neuem, d. h. die Schritte S1-S7 werden erneut durchgeführt.

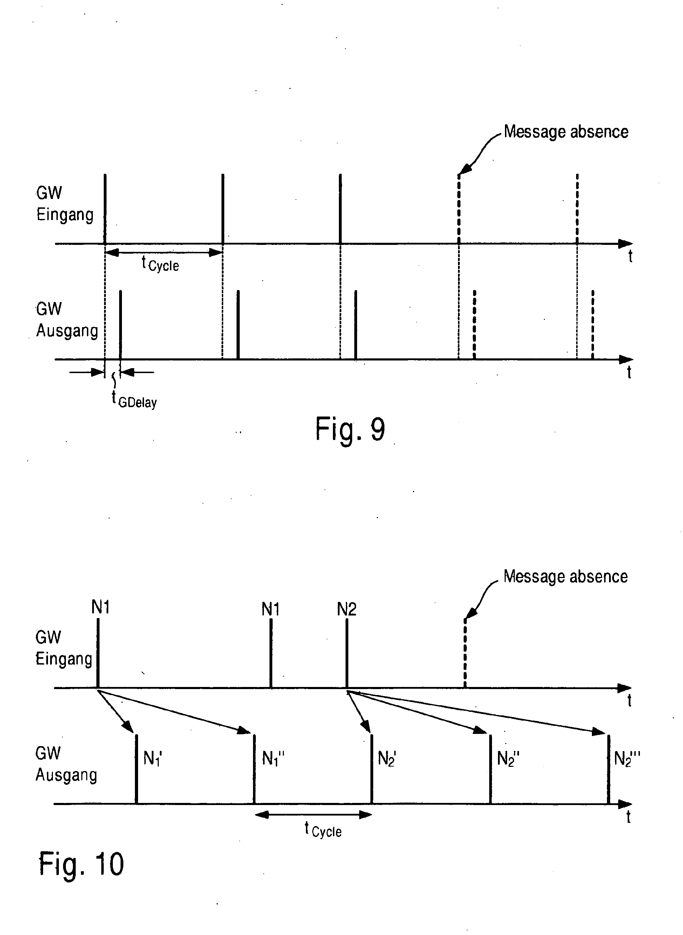

Figur 9 zeigt zwei Zeitsignaldiagramme, wobei das obere Signaldiagramm eine an dem erfindungsgemäßen Gateway ankommende Nachricht bzw. Message-Objekt MO darstellt, an das zweite untere Zeitsignaldiagramm von dem erfindungsgemäßen Gateway 1 an einen anderen seriellen Bus abgegebene Nachrichten zeigt. Bei dem in Figur 9 dargestellten Beispiel wird eine an einem ersten seriellen Bus 3-i empfangene Nachricht MO direkt über einen anderen seriellen Bus 3-j weitergeleitet, wobei eine leichte Zeitverzögerung $t_{GD\ delay}$ auftritt. Wie man in Figur 9 erkennen kann, ist die Sende-Zykluszeit $t_{zyklus}$ konstant, d. h. empfangene Nachrichtenobjekte N (zyklisch oder spontan) werden zyklisch weitergeleitet.

Figur 10 zeigt das zyklische Senden von Nachrichten N durch das erfindungsgemäße Gateway 1, selbst wenn die empfangenen Nachrichtenobjekte N nicht zyklisch empfangen werden. Die zuletzt empfangene Nachricht $N_i$ wird kontinuierlich zyklisch innerhalb einer konstanten Zyklusdauer an einen Bus 3-i ausgesendet.

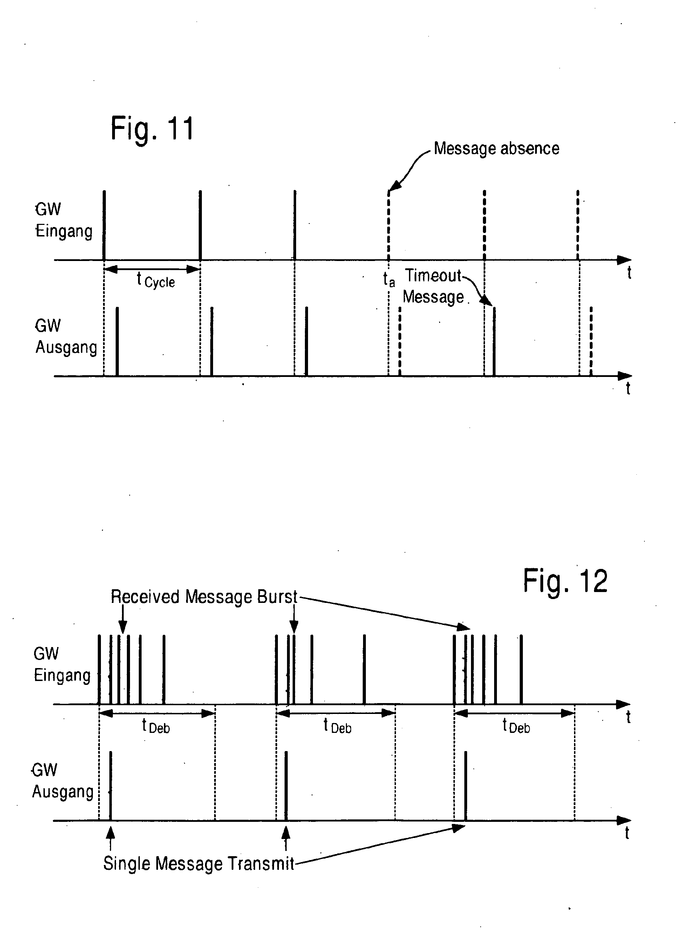

Figur 11 zeigt die unmittelbare Weiterleitung einer Nachricht mit Time-out; d. h. die Abwesenheit einer erwarteten Nachricht wird überwacht. Wie man aus Figur 11 erkennen kann, wird über einen ersten seriellen Bus 3-i eine Nachricht N bzw. ein Message-Objekt empfangen und unmittelbar an einen Ausgangsbus weitergeleitet. Zum Zeitpunkt $t_A$ wird festgestellt, dass die erwartete Nachricht nicht eingetroffen ist und das Gateway 1 generiert, eine Time-out-Nachricht, welche als Ausgangsnachricht an den Ausgangsbus abgegeben wird, um das Ausbleiben der erwarteten Nachricht anzuzeigen. Zur Durchführung des in Figur 11 dargestellten Vorgangs führt die Ablaufsteuerung die in Figur 8 dargestellten Schritte S1 beim Empfang einer derartigen Nachricht (Nachricht korrekt im Zeitraster empfangen) und S3 beim Ausbleiben der Nachricht N (Auslösen des Time-out) nicht aus, sondern jeweils nur die übrigen Schritte.

Figur 12 zeigt das Entprellen bzw. Debouncen von Nachrichten-Bursts. In dem in Figur 12 dargestellten Beispiel enthält das Gateway 1 eine Nachricht mehrfach innerhalb eines vorgegebenen Fensters $t_{DEB}$ und leitet lediglich die erste Nachricht der Gruppe an einen anderen seriellen Bus 3-i weiter. Die übrigen Nachrichten innerhalb des Bursts werden durch das Gateway 1 unterdrückt. Bei der in Figur 12 dargestellten Funktion bzw. dem entsprechenden Betriebsmodus wird in einem ersten Durchlauf ein sogenanntes Debounce-Active-Bit als Konfigurationsdatum in dem Nachrichtenvektor NV des Vektorspeichers VRAM zum Empfang einer Nachricht gesetzt. Sobald das Debounce-Active-Bit gesetzt ist, erfolgt der in Figur 8 dargestellte Vorgang, wobei der Schritt S3 entfällt. Abschließend wird das Debounce-Active-Bit dann in den Konfigurationsdaten wieder zurückgesetzt.

Wie man aus den Figuren 9, 10, 11, 12 erkennen kann, eignet sich das erfindungsgemäße Gateway 1 für verschiedene Betriebsmodi bzw. Funktionen zur Weiterleitung bzw. Bearbeitung von Nachrichten, die zwischen verschiedenen Bussen 3-i, 3-j übertragen werden. Bei dem erfindungsgemäßen Gateway 1 wird in Abhängigkeit von dem auftretenden Datenaufkommen die CPU-Last für die automatische Überprüfung auf Time-outs und das erforderliche Senden von Nachrichten oder die Kombination von mehreren Nachrichten durch die Gateway-Steuereinheit 4-1 erheblich gesenkt. Das Senden der Nachrichten bzw. des Message-Objekts sowie deren Überprüfung auf eventuelle Time-outs erfolgt durch die Gateway-Steuereinheit 4-1 unabhängig von den parallel laufenden Prozessen in der CPU 4-2. Dadurch werden wesentlich kleinere Jitter und Latenzzeiten erreicht, wodurch Prozesse im Netzwerk genauer gestartet und ausgeführt werden können. Dabei kann jedes Message-Objekt bzw. jede Nachricht N unabhängig von anderen Netzwerken und unabhängig von anderen Message-Objekten in den einzelnen Kommunikationsbausteinen bzw. Bus-Modulen konfiguriert werden. Durch die in dem erfindungsgemäßen Gateway 1 eingesetzte Verweistechnik mittels Vektoren besteht eine besonders hohe Flexibilität bezüglich der Konfigurierbarkeit des erfindungsgemäßen Gateways 1. Durch die Bildung von Gruppen von speicherbaren Nachrichten N innerhalb eines jeden Kommunikationsbausteins 2 ist eine weitere Verschachtelung möglich, wodurch die Flexibilität weiter gesteigert wird. Zusätzlich wird die Geschwindigkeit für Suchvorgänge zu bearbeitender Nachrichten wesentlich verkürzt und durch die kompakte Definition eines Kommunikationsvorgangs der Speicherbedarf für alle Nachrichtenobjekte minimiert. Das erfindungsgemäße Gateway 1 eröffnet die Möglichkeit, dass externe Ereignisse bzw. Events den zeitlichen Ablauf von internen Ereignissen bzw. internen Events mitbestimmen bzw. steuern. Das erfindungsgemäße Gateway 1 überträgt Daten zwischen Feldbussen bzw. seriellen Bussen 3 automatisch ohne die CPU 4-2 zu belasten. Dabei wird das periodische Senden innerhalb eines vorgegebenen Zeitrasters, die sofortige Übermittlung nach Erhalt einer Nachricht, die Überprüfung auf Ausbleiben einer Nachricht sowie das Entprellen von Nachrichten ermöglicht. Die Übermittlung der Nachrichten N erfolgt dabei ohne direkte Kontrolle durch die CPU. Die CPU 4-2 erhält jedoch jederzeit den Zugriff auf die weitergeleiteten bzw. verwendeten Nachrichtenobjekte bzw. Message-Objekte, ohne dabei das automatische Routen der Nachrichten zu unterbrechen. Die Übertragung bzw. Weiterleitung der Message-Objekte bzw. der Nachrichten N erfolgt bei dem erfindungsgemäßen Gateway 1 unabhängig von Software-Latenzzeiten und der aktuellen Last der CPU 4-2.

**Patentansprüche**

1. Gateway zum automatischen Routen von Nachrichten zwischen Bussen (3) mit:

   (a) mehreren Kommunikationsbausteinen (2) zum Zwischenspeichern und Übertragen von Nachrichten (N) über die Busse (3); und mit
   (b) einer Gateway-Steuereinheit (4-1), die über einen Systembus (5-1) zum Austausch von Nachrichten (N) mit den Kommunikationsbausteinen (2) verbunden ist, und die von jedem Kommunikationsbaustein (2) das dortige Auftreten einer zu routenden Nachricht (N) als externes Ereignis ($EV_{ext}$) angezeigt erhält,
   darduch gekennzeichnet daß die Gateway-Steuereinheit (4-1) das folgende aufweist:

   (b1) einen Vektorspeicher (VRAM) mit einem ersten Speicherbereich zum Speichern von Kommunikationsbausteinen-Vektoren (KBV), wobei für jeden Kommunikationsbaustein (2) ein Kommunikationsbaustein-Vektor (KBV) vorgesehen ist, der den Zeitpunk, ZP, eines als nächstes zu erwartenden internen Ereignisses ($EV_{int}$) das von einem Zeitgeber ausgelöst wird, für eine in dem Kommunikationsbaustein (2) zwischengespeicherte Nachricht (N) und eine Vektorsprungadresse auf einen Nachrichtenvektor (NV) angibt, der in einem zweiten Speicherbereich des Vektorspeichers (VRAM) gespeichert ist, wobei für jede in dem Kommunikationsbaustein (2) zwischengespeicherte Nachricht (N) ein entsprechender Nachrichtenvektor (NV) gespeichert ist, der einen konfigurierbaren Zeitpunkt, ZP, eines von der zugehörigen Nachricht (N) auszulösenden internen Ereignisses ($EV_{int}$) sowie eine Befehlssprungadresse angibt;
   (b2) einen Befehlsspeicher (IRAM) zum Speichern von Befehlen, die durch die in dem Nachrichtenvektor (NV) angegebene Befehlssprungadresse adressierbar sind; und
   (b3) eine Ablaufsteuerung (FSM), die bei Auftreten eines internen Ereignisses ($EV_{int}$) dessen Zeitpunkt, ZP, in einem Nachrichtenvektor (NV) einer in einem Kommunikationsbaustein (2) zwischengespeicherten Nachricht (N) angegeben ist, oder bei Auftreten eines externen Ereignisses ($EV_{ext}$), das der Ablaufsteuerung (FSM) durch einen Kommunikationsbaustein (2) angezeigt wird, den zu dem jeweiligen Kommunikationsbaustein (2) zugehörigen Kommunikationsbaustein-Vektor (KBV) aus dem ersten Speicherbereich des Vektorspeichers (VRAM) ausliest und mittels der darin enthaltenen Vektorsprungadresse die Befehlssprungadresse des adressierten Nachrichtenvektors (NV) aus dem zweiten Speicherbereich des Vektorspeichers (VRAM) ausliest und anschließend mittels der ausgelesenen Befehlssprungadresse mindestens einen Befehl aus dem Befehlsspeicher (IRAM) ausliest und ausführt, wobei die in den Vektoren (NV, KBV) angegebenen Zeitpunkte, ZP, aktualisiert werden.

2. Gateway nach Anspruch 1,
   wobei das Gateway (1) einen Prozessor (4-2) aufweist, der über einen separaten zweiten Systembus (5-2) mit den Kommunikationsbausteinen (2) verbunden ist.

3. Gateway nach Anspruch 1,
   wobei die Ablaufsteuerung (FSM) der Gateway-Steuereinheit (4-1) aufweist:

eine Ereignis-FSM (Finite State Machine), welche bei Auftreten eines internen oder eines externen Ereignisses die im Vektorspeicher (VRAM) gespeicherten Vektoren (KBV, NV) auswertet und die in den Vektoren angegebenen Zeitpunkte aktualisiert; und

eine Befehls-FSM (Finite State Machine), welche die aus dem Befehlsspeicher (IRAM) ausgelesenen Befehle ausführt.

4. Gateway nach Anspruch 1,
wobei der Nachrichtenvektor (NV) zusätzliche eine Zeitdifferenz ($\Delta t$) zwischen dem Zeitpunkt, ZP, eines von der zugehörigen Nachricht (N) auszulösenden internen Ereignisses und einem Zeitpunkt, ZP, des nächsten von der zugehörigen Nachricht (N) auszulösenden internen Ereignisses aufweist.

5. Gateway nach Anspruch 1,
wobei die Gateway-Steuereinheit (4-1) einen Zähler (Z) als internen Zeitgeber zum Auslösten eines internen Ereignisses ($Ev_{int}$) aufweist.

6. Gateway nach Anspruch 1,
wobei die Gateway-Steuereinheit (4-1) ein Statusregister (SR) aufweist, welches denjenigen Zeitpunkt, ZP, für das nächste zu erwartende Ereignisses von allen erwartenden internen Ereignissen für alle in den Kommunikationsbausteinen (2) zwischengespeicherten Nachrichten (N) zwischenspeichert.

7. Gateway nach Anspruch 1,
wobei die Busse (3) serielle Busse sind.

8. Gateway nach Anspruch 2,
wobei jeder Kommunikationsbaustein (2) aufweist:

(a) eine an den seriellen Bus (3) angeschlossene Kommunikations-Protokolleinheit (2c) zur Umsetzung zwischen Datenpaketen, DP, und Nachrichten, MSG, die jeweils aus mehreren Datenworten, DW, bestehen;
(b) eine Nachrichtenweiterleitungseinheit (2d) zur Weiterleitung von Nachrichten, MSG, zwischen mindestens einem Nachrichtenspeicher (2e) und der Kommunikations-Protokolleinheit (2c) sowie Pufferspeichern (2f, 2g);
(c) mehrere Interface-Einheiten (2a, 2b), die jeweils an einen zugehörigen Systembus (5-1, 5-2) des Gateways (1) angeschlossen sind,
wobei jede Interface-Einheit (2a, 2b) mit mindestens einem zugehörigen Pufferspeicher (2f, 2g) verbunden ist, der eine Nachricht, MSG, zwischenspeichert;
wobei eine Übertragung von Datenworten (DW) über mehrere Systembusse (5-1, 5-2) und deren zugehörige Interface-Einheiten (2a, 2b) von und zu den Pufferspeichern (2f, 2g) der Interface-Einheiten (2a, 2b) zeitgleich ohne Wartezeit erfolgt.

9. Gateway nach Anspruch 7,
wobei der serielle Bus (3) ein Feldbus ist.

10. Gateway nach Anspruch 9,
wobei der Feldbus ein CAN, Controller Area Network; Bus ist.

11. Gateway nach Anspruch 9,
wobei der serielle Bus (3) ein Ethernet-Bus ist.

12. Gateway nach Anspruch 2,
wobei jeder der beiden Systembusse (5-1, 5-2) einen zugehörigen Systembus-Master (4-1, 4-2) aufweist.

13. Gateway nach Anspruch 8,
wobei die Nachrichtenweiterleitungseinheit (2d) eines Kommunikationsbausteins (2) den Empfang einer über einen Systembus (5-1, 5-2) wortweise übertragenen Nachricht an den Systembus-Master (4-1, 4-2) des Systembusses signalisiert.

14. Gateway nach Anspruch 8,
wobei die Nachrichtenweiterleitungseinheit (2d) eines Kommunikationsbausteins dem Systembus-Master (4-1, 4-2) den Erhalt einer zu übertragenden Nachricht durch Signale bestätigt, nachdem dieser die Information angefragt hat.

**15.** Gateway nach Anspruch 8,
wobei eine von dem jeweiligen Systembus (5-1, 5-2) empfangene Nachricht, welche in einem Pufferspeicher (2f, 2g) zwischengespeichert und von der Nachrichtenweiterleitungseinheit (2d) an den Nachrichtenspeicher (2e) weitergeleitet wird, zur Signalisierung einer Sendebereitschaft über den seriellen Bus (3) mindestens ein Flag-Bit aufweist.

## Claims

**1.** Gateway for the automatic routing of messages between buses (3) comprising

(a) a number of communication chips (2) for temporarily storing and transmitting messages (N) via the buses (3); and comprising
(b) a gateway control unit (4-1) which is connected to the communication chips (2) via a system bus (5-1) for exchanging messages (N) and which receives from each communication chip (2) the occurrence there of a message (N) to be routed, shown as an external event ($Ev_{ext}$),
**characterized in that** the gateway control unit (4-1) has the following:

(b1) a vector memory (VRAM) comprising a first memory area for storing communication chips vectors (KBV), wherein for each communication chip (2), a communication chip vector (KBV) is provided which specifies the time (ZP) of an internal event ($EV_{int}$) to be expected next, which is triggered by a timer, for a message (N) temporarily stored in the communication chip (2), and a vector jump address to a message vector (NV) which is stored in a second memory area of the vector memory (VRAM), wherein for each message (N) temporarily stored in the communication chip (2), a corresponding message vector (NV) is stored which specifies a configurable time (ZP) of an internal event ($EV_{int}$) to be triggered by the associated message (N), and an instruction jump address;
(b2) an instruction memory (IRAM) for storing instructions which are addressable by the instruction jump address specified in the message vector (NV); and
(b3) a sequence control (FSM) which, on occurrence of an internal event ($EV_{int}$), the time (ZP) of which is specified in a message vector (NV) of a message (N) temporarily stored in a communication chip (2), or, on occurrence of an external event ($EV_{ext}$), which is indicated to the sequence control (FSM) by a communication chip (2), reads out the communication chip vector (KBV) associated with the respective communication chip (2) out of the first memory area of the vector memory (VRAM) and by means of the vector jump address contained therein reads out the instruction jump address of the message vector (NV) addressed out of the second memory area of the vector memory (VRAM) and subsequently reads out and executes at least one instruction out of the instruction memory (IRAM) by means of the instruction jump address read out, wherein the times (ZP) specified in the vectors (NV, KBV) are updated.

**2.** Gateway according to Claim 1, wherein the gateway (1) has a processor (4-2) which is connected to the communication chips (2) via a separate second system bus (5-2).

**3.** Gateway according to Claim 1, wherein the sequence control (FSM) of the gateway control unit (4-1) has:

an event FSM (Finite State Machine) which, on occurrence of an internal or an external event, evaluates the vectors (KBV, NV) stored in the vector memory (VRAM) and updates the times specified in the vectors; and
an instruction FSM (Finite State Machine) which executes the instructions read out of the instruction memory (IRAM).

**4.** Gateway according to Claim 1, wherein the message vector (NV) additionally has a time difference ($\Delta t$) between the time (ZP) of an internal event to be triggered by the associated message (N) and a time (ZP) of the next internal event to be triggered by the associated message (N).

**5.** Gateway according to Claim 1, wherein the gateway control unit (4-1) has a counter (Z) as internal timer for triggering an internal event ($EV_{int}$).

**6.** Gateway according to Claim 1, wherein the gateway control unit (4-1) has a status register (SR) which temporarily stores the time (ZP) for the next event to be expected of all internal events to be expected for all messages (N) temporarily stored in the communication chips (2).

**7.** Gateway according to Claim 1, wherein the buses (3) are serial buses.

**8.** Gateway according to Claim 2, wherein each communication chip (2) has:

(a) a communication protocol unit (2c), connected to the serial bus (3), for converting between data packets (DP) and messages (MSG) which in each case consist of a number of data words (DW);
(b) a message forwarding unit (2d) for forwarding messages (MSG) between at least one message memory (2e) and the communication protocol unit (2c) and buffer memories (2f, 2g);
(c) a number of interface units (2a, 2b) which are in each case connected to an associated system bus (5-1, 5-2) of the gateway (1), wherein each interface unit (2a, 2b) is connected to at least one associated buffer memory (2f, 2g) which temporarily stores a message (MSG);
wherein a transmission of data words (DW) takes place over a number of system buses (5-1, 5-2) and their associated interface units (2a, 2b) from and to the buffer memories (2f, 2g) of the interface units (2a, 2b) at the same time without waiting time.

**9.** Gateway according to Claim 7, wherein the serial bus (3) is a field bus.

**10.** Gateway according to Claim 9, wherein the field bus is a CAN (Controller Area Network) bus.

**11.** Gateway according to Claim 9, wherein the serial bus (3) is an Ethernet bus.

**12.** Gateway according to Claim 2, wherein each of the two system buses (5-1, 5-2) has an associated system bus master (4-1, 4-2).

**13.** Gateway according to Claim 8, wherein the message forwarding unit (2d) of a communication chip (2) signals the reception of a message, transmitted word by word via a system bus (5-1,5-2), to the system bus master (4-1, 4-2) of the system bus.

**14.** Gateway according to Claim 8, wherein the message forwarding unit (2d) of a communication chip confirms to the system bus master (4-1, 4-2) by signals the reception of a message to be transmitted after the latter has requested the information.

**15.** Gateway according to Claim 8, wherein a message received by the respective system bus (5-1, 5-2), which is temporarily stored in a buffer memory (2f, 2g) and forwarded by the message forwarding unit (2d) to the message memory (2e), has at least one flag bit for signalling a readiness to transmit via the serial bus (3).

**Revendications**

**1.** Passerelle pour le routage automatique de messages entre des bus (3), comprenant :

(a) plusieurs composants de communication (2) pour le stockage temporaire et la transmission de messages (N) sur les bus (3) ; et comprenant
(b) une unité de commande de passerelle (4-1) qui est reliée avec les composants de communication (2) par le biais d'un bus système (5-1) pour l'échange de messages (N) et à laquelle chaque composant de communication (2) signale, sous la forme d'un évènement externe ($EV_{ext}$), l'apparition à son niveau d'un message (N) à router, **caractérisée en ce que** l'unité de commande de passerelle (4-1) présente les éléments suivants :

(b1) une mémoire vectorielle (VRAM) comprenant une première zone de mémoire pour mémoriser des vecteurs de composant de communication (KBV), un vecteur de composant de communication (KBV) étant prévu pour chaque composant de communication (2), lequel indique l'instant, ZP, auquel un prochain évènement interne ($EV_{int}$) attendu est déclenché par un codeur de temps pour un message (N) mémorisé temporairement dans le composant de communication (2) et une adresse de saut de vecteur sur un vecteur de message (NV), lequel est mémorisé dans une deuxième zone de mémoire de la mémoire vectorielle (VRAM), un vecteur de message (NV) correspondant étant mémorisé pour chaque message (N) mémorisé temporairement dans le composant de communication (2), lequel indique un instant, ZP, configurable d'un évènement interne ($EV_{int}$) à déclencher par le message (N) associé ainsi qu'une adresse de saut d'instruction ;

(b2) une mémoire d'instructions (IRAM) pour mémoriser des instructions qui peuvent être invoquées par adressage par le biais de l'adresse de saut d'instruction indiquée dans le vecteur de message (NV) ; et
(b3) une commande de déroulement (FSM) qui, lorsqu'il se produit un évènement interne ($EV_{int}$) dont l'instant, ZP, est indiqué dans un vecteur de message (NV) d'un message (N) mémorisé temporairement dans le composant de communication (2) ou lorsqu'il se produit un évènement externe ($EV_{ext}$) qui est indiqué à la commande de déroulement (FSM) par un composant de communication (2), lit le vecteur dé composant de communication (KBV) associé au composant de communication (2) correspondant depuis la première zone de mémoire de la mémoire vectorielle (VRAM) et, au moyen de l'adresse de saut de vecteur qui y est contenue, lit l'adresse de saut d'instruction du vecteur de message (NV) invoqué par adressage depuis la deuxième zone de mémoire de la mémoire vectorielle (VRAM) et ensuite, au moyen de l'adresse de saut d'instruction lue, lit au moins une instruction depuis la mémoire d'instructions (IRAM) et l'exécute, les instants, ZP, indiqués dans les vecteurs (NV, KBV) étant actualisés.

2. Passerelle selon la revendication 1, la passerelle (1) présentant un processeur (4-2) qui est relié avec les composants de communication (2) par le biais d'un deuxième bus système (5-2) séparé.

3. Passerelle selon la revendication 1, la commande de déroulement (FSM) de l'unité de commande de passerelle (4-1) présentant :

une machine à états finis (FSM) d'évènement qui, lorsqu'il se produit un évènement interne ou externe, interprète les vecteurs (KBV, NV) mémorisés dans la mémoire vectorielle (VRAM) et actualise les instants indiqués dans les vecteurs ; et une machine à états finis (FSM) d'instruction qui exécute les instructions lues depuis la mémoire d'instructions (IRAM).

4. Passerelle selon la revendication 1; le vecteur de message (NV) présentant en plus une différence de temps ($\Delta t$) entre l'instant, ZP, d'un évènement interne à déclencher par le message (N) correspondant et un instant, ZP, du prochain évènement interne à déclencher par le message (N) correspondant.

5. Passerelle selon la revendication 1, l'unité de commande de passerelle (4-1) présentant un compteur (Z) en tant que codeur de temps interne pour déclencher un évènement interne ($EV_{int}$).

6. Passerelle selon la revendication 1, l'unité de commande de passerelle (4-1) présentant un registre d'état (SR) qui mémorise temporairement l'instant, ZP, pour le prochain évènement attendu parmi tous les évènements internes attendus pour tous les messages (N) mémorisés temporairement dans les composants de communication (2).

7. Passerelle selon la revendication 1, les bus (3) étant des bus série.

8. Passerelle selon la revendication 2, chaque composant de communication (2) présentant :

(a) une unité de protocole de communication (2c) connectée au bus série (3) pour la conversion entre des paquets de données, DP, et des messages, MSG, qui se composent respectivement de plusieurs mots de données, DW ;
(b) une unité de retransmission de message (2d) pour retransmettre les messages, MSG, entre au moins une mémoire de message (2e) et l'unité de protocole de communication (2c) ainsi que des mémoires tampon (2f, 2g) ;
(c) plusieurs unités d'interface (2a, 2b) qui sont respectivement connectées à un bus système (5-1, 5-2) associé de la passerelle (1), chaque unité d'interface (2a, 2b) étant reliée avec au moins une mémoire tampon (2f, 2g) associée qui mémorise temporairement un message, MSG ;
une transmission de mots de données (DW) par le biais de plusieurs bus système (5-1, 5-2) et de leurs unités d'interface (2a, 2b) associées depuis et vers les mémoires tampon (2f, 2g) des unités d'interface (2a, 2b) s'effectuant de manière isochrone sans temps d'attente.

9. Passerelle selon la revendication 7, le bus série (3) étant un bus de terrain.

10. Passerelle selon la revendication 9, le bus de terrain étant un bus CAN (Controller Area Network - Réseau de zone de contrôleur).

11. Passerelle selon la revendication 9, le bus série (3) étant un bus Ethernet.

**12.** Passerelle selon la revendication 2, chacun des deux bus système (5-1, 5-2) présentant un maître de bus système (4-1, 4-2) associé.

**13.** Passerelle selon la revendication 8, l'unité de retransmission de message (2d) d'un composant de communication (2) signalant au maître de bus système (4-1, 4-2) du bus système la réception d'un message transmis mot par mot par le biais d'un bus système (5-1, 5-2).

**14.** Passerelle selon la revendication 8, l'unité de retransmission de message (2d) d'un composant de communication confirmant par des signaux au maître de bus système (4-1, 4-2) la réception d'un message à transmettre après que celui-ci ait demandé l'information.

**15.** Passerelle selon la revendication 8, un message reçu par le bus système (5-1, 5-2) correspondant, lequel est mémorisé temporairement dans une mémoire tampon (2f, 2g) et est retransmis à la mémoire de message (2e) par l'unité de retransmission de message (2d), présentant au moins un bit marqueur pour signaler un état prêt à émettre par le biais du bus série (3).

Fig. 1 (Stand der Technik)

Fig. 2 (Stand der Technik)

Fig. 3

Fig. 4

**Fig. 5**

Gateway - Steuer - Einheit 4-1

Konfigurations-/
Statusregister
SR

Vektor -
RAM
( V - RAM )

$EV_{ext}$

N·m

System -
Bus -
Interface

(Master &
Slave)

SBI

5-1

Zähler
Z

$EV_{int}$

Ereignis -
FSM

Befehls -
FSM

Ablaufsteuerung FSM

Instruktions -
RAM

( I - RAM )

Systembus

EP 1 987 642 B1

Fig. 6

**VEKTOR - RAM**
**IRAM**

| KBV-1 | VSA |
|-------|-----|
| KBV-2 | |
| ⋮ | |
| KBV-N | |

| NV-1 |
|------|
| NV-2 |
| ⋮ |
| NV-N |

Datenspeicher

Fig. 7

**Instruktions - RAM**

BSA-1-1 →

Befehlspufferspeicher
2 - 1 - N1

BSA-1-2 →

Befehlspufferspeicher
2 - 1 - N2

⋮

BSA →

Befehlspufferspeicher
2 - N - Nm

## Fig. 8

nächstes Event
(in Statusregister) SR$_0$

$t_{nxtEVT-all}$

nächstes Event
(Objekt, VRAM-CC) (S1)

$t_{nxtEVT-Grp1}$

$t_{nxtEVT-Grp2}$

nächstes Event
(Objekt, VRAM-M0) (S2)

$t_{nxtEVT-Grp1-M01}$

$t_{nxtEVT-Grp1-M02}$

$t_{nxtEVT-Grp2-M01}$

$t_{nxtEVT-Grp2-M02}$

$t_{Timer}$

$t_n$    $t_{n+1}$    $t_{n+2}$    $t_{n+3}$

$t_0$    $t_m$    $t_{m+1}$    $t_{0+1}$    $t_{0+2}$

$t_{0-1}$    $t_{0-2}$    $t_{0-1+1}$

(S3) (S4) (S5) (S6) (S7)

$\Delta t_{Grp2-M01}$

$\Delta t_{Grp2-M02}$

1*

Message absence

GW
Eingang

$t_{Cycle}$

t

GW
Ausgang

$t_{GDelay}$

t

## Fig. 9

Message absence

N1                    N1        N2
GW
Eingang

t

GW
Ausgang    $N_1'$        $N_1''$        $N_2'$        $N_2''$        $N_2'''$

$t_{Cycle}$

t

## Fig. 10

## Fig. 11

Message absence

GW
Eingang

$t_{Cycle}$

$t_a$ Timeout
Message

GW
Ausgang

t

t

## Fig. 12

Received Message Burst

GW
Eingang

$t_{Deb}$          $t_{Deb}$          $t_{Deb}$

t

GW
Ausgang

Single Message Transmit

t

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Clock synchronisation on multiple TTCAN network channels. **RYAN C et al.** MIROPROCESSORS AND MICROSYSTEMS. IPC BUSINESS PRESS LTD, 23. April 2004, vol. 28, 135-146